# EUROPÄISCHE PATENTSCHRIFT

(11) **EP 2 349 804 B1**
(45) Veröffentlichungstag und Bekanntmachung des Hinweises auf die Patenterteilung: **13.08.2014**
(21) Anmeldenummer: 09740132.7
(22) Anmeldetag: 22.10.2009
(51) Int. Cl.: B60W 50/08, B60R 11/02, B60R 25/00, G01C 11/02, G01C 21/26, G01C 21/36

(54) **FAHRERASSISTENZ ZUR VERWENDUNG ANGEPASSTER MENSCH-MASCHINE-SCHNITTSTELLE (MMS) ELEMENTE**
DRIVER ASSISTANCE SYSTEM FOR USING ADAPTED HUMAN-MACHINE INTERFACE (HMI) ELEMENTS
SYSTÈME D'AIDE À LA CONDUITE DESTINÉ À UTILISER DES ÉLÉMENTS D'INTERFACE HOMME-MACHINE (IHM) ADAPTÉS

(30) Priorität: 22.10.2008 DE 102008043077
(43) Veröffentlichungstag der Anmeldung: 03.08.2011
(73) Patentinhaber: Continental Teves AG & Co. oHG, 60488 Frankfurt (DE)
(72) Erfinder: STÄHLIN, Ulrich, 65670 Eschborn (DE); GEE, Robert, Lake Barrington, IL 60010 (US)
(74) Vertreter: Bonn, Roman Klemens
(86) Internationale Anmeldenummer: PCT/EP2009/063927
(87) Internationale Veröffentlichungsnummer: WO 2010/046453

(56) Entgegenhaltungen:
- EP-A1- 1 568 555
- EP-A2- 1 145 909
- WO-A2-2008/079891
- US-A1- 2007 143 798

## Beschreibung

### Gebiet der Erfindung

Die Erfindung betrifft die Integration mobiler Geräte in Fahrzeugen. Insbesondere betrifft die Erfindung ein Fahrerassistenzsystem zum Einbau in ein Fahrzeug, ein Verfahren zur Anpassung von MMS Elementen eines mobilen Gerätes, ein Fahrzeug, ein Programmelement und ein computerlesbares Medium.

### Technologischer Hintergrund

Die WO2008/079891 ist als nächstliegende Stand der Technik nach dem Oberbegriff des Anspruchs 1 zu sehen und offenbart ein System zum Anbringen in einem Fahrzeug. Das System kann Bilder, die auf einem mobilen Endgerät wiedergegeben werden und von außen in das Fahrzeug einbringbar sind, wiedergeben. Das System umfasst eine Wiedergabeschnittstelle, um eine visuelle Darstellung durchführen zu können und eine Kommunikationseinheit, zum Anbringen in einem Fahrzeug, wobei die Kommunikationseinheit der Art konfiguriert wird, dass diese von dem mobilen Endgerät Bilder Empfangen kann. Das System umfasst weitergehend ein Rechnersystem das mit der Kommunikationseinheit und der Wiedergabeschnittstelle verkoppelt ist und das Rechnersystem die Wiedergabeeinheit eine Darstellung eines Bildes zur Verfügung stellt. Desweitern weist das System ein Speichergerät, das mit dem Rechnersystem in einem Kommunikationsverbindung stehen kann und bringt Quellcode zur Regelung des Kommunikationseinheit ein, so dass die Darstellung des Bildes, das der Wiedergabeschnittstelle zur Verfügung gestellt wird und zyklisch auf Änderungen hin überprüft, um die Darstellung, die auf dem mobilen Endgeräte dargestellt wird, zeitnah auf der Wiedergabeschnittstelle darzustellen.

Die Anbindung von mobilen Geräten an Fahrzeuge verschiedener Originalgerätehersteller (Original Equipment Manufacturer, OEM) ergibt häufig Probleme mit der Benutzerschnittstelle. Jeder OEM verfolgt hier seine eigene Philosophie hinsichtlich Akustik, Optik und Struktur der Menüführung und möchte sich diese nicht durch mobile Geräte vorgeben lassen. Dabei möchte der Fahrzeughersteller beispielsweise nicht, dass Darstellungen auf Bildschirmen in seinem Fahrzeug durch ein Design, dass durch MMS Elemente wie Icons des mobilen Gerätes implementiert wird. Mit anderen Worten wird bisher eine Fremdbestimmung des Designs einer Benutzerschnittstelle im Fahrzeug nicht ermöglicht.

Verwendet ein Benutzer ein mobiles Gerät in einem Fahrzeug, was durch das Fahrzeug zum Beispiel aus oben genannten Gründen nicht oder nur teilweise unterstützt wird, so kann sich ein Verkehrsrisiko dadurch ergeben, dass dieses mobile Gerät an einer nicht optimalen Stelle des Fahrzeuges angeordnet werden muss. Dies kann den Blick des Fahrers beispielsweise unnötig lange von der Fahrbahn ablenken.

Weiterhin kann es als Verkehrsrisiko betrachtet werden, dass ein Benutzer die grafische Oberfläche eines mobilen Gerätes gut kennt, er auf diese jedoch in einem Fahrzeug nicht auf dem fahrzeugeigenen Display zugreifen kann, sondern nur auf eine grafisch für ihn unbekannte Version, die vom Fahrzeughersteller stammt. Damit erreicht der Hersteller zwar eine Konsistenz der in seinem Fahrzeug dargestellten Oberflächen, jedoch birgt dies ebenfalls ein Risiko im Straßenverkehr für den Benutzer.

### ZUSAMMENFASSUNG DER ERFINDUNG

Es kann als eine Aufgabe der Erfindung angesehen werden, die Sicherheit im Straßenverkehr bei der Verwendung mobiler Geräte in Fahrzeugen zu erhöhen.

Es sind ein Fahrerassistenzsystem für ein Fahrzeug, ein Fahrzeug mit einem Fahrerassistenzsystem, ein Verfahren zur Anpassung von MMS Elementen eines mobilen Gerätes, ein Programmelement und ein computerlesbares Medium gemäß den Merkmalen der unabhängigen Patentansprüche angegeben. Weiterbildungen der Erfindung ergeben sich aus den Unteransprüchen.

Die beschriebenen Ausführungsbeispiele betreffen gleichermaßen das Fahrerassistenzsystem, das Fahrzeug mit einem Fahrerassistenzsystem, das Verfahren, das Programmelement sowie das computerlesbare Medium. Mit anderen Worten lassen sich beispielsweise Merkmale, die im Folgenden im Hinblick auf das Verfahren beschrieben werden, auch als Merkmal das Fahrerassistenzsystems, des Fahrzeuges, des Programmelements sowie des computerlesbaren Mediums implementieren, und umgekehrt.

Gemäß einem Ausführungsbeispiel der Erfindung ist ein Fahrerassistenzsystem zum Einbau in ein Fährzeug angegeben, wobei das Fahrerassistenzsystem eine Kommunikationsschnittstelle zum Empfang von geräteeigenen MMS Elementen eines mobilen Gerätes ausgeführt ist. Das Fahrerassistenzsystem weist weiterhin eine Steuereinheit auf, die zur Verwendung der geräteeigenen MMS-Elemente ausgeführt ist, falls die MMS-Elemente von einer Authentifizierungsstelle zur Verwendung in dem Fahrerassistenzsystem freigegeben sind, und die zur Verwendung von fahrzeugeigenen MMS-Elementen ausgeführt ist, falls die MMS-Elemente von der Authentifizierungsstelle nicht zur Verwendung in dem Fahrerassistenzsystem freigegeben sind.

Dabei sind im Kontext der Erfindung unter Fahrerassistenzsystem neben klassischen Systemen zu Assistenz des Fahrers wie Advanced Driver Assistance Systems (ADAS) auch Infotainmentfunktionen wie Telefon, Audio, Video und Navigation zu verstehen.

Dabei ist im Kontext der Erfindung der Begriff "geräteeigen" synonym zu "von dem mobilen Gerät stammend" zu verwenden.

Weiterhin werden die MMS Elemente im Kontext der Erfindung beim Einsatz des mobilen Gerätes direkt an das Fahrerassistenzsystem übertragen, ohne dass dazwischen ein Gerät wie ein Proxy Server besteht. Dies ist von Bedeutung für die Erfindung.

Dabei ist für dieses und jedes andere Ausführungsbeispiel der Erfindung von Bedeutung, dass die Authentifizierungsstelle extern von dem Fahrzeug liegt, beispielsweise beim Fahrzeughersteller. Mit anderen Worten ist die Authentifizierungsstelle und der Authentifizierungsschritt zentral geregelt und findet nicht im Fahrzeug statt.

Im Kontext der Erfindung kann unter dem Begriff "mobiles Gerät" neben einem Navigationsgerät, einem Audioabspielgerät, einem Videoabspielgerät und einem Telefon auch ein Computer verstanden werden. Weitere Beispiele sind Funkgeräte, Fotoapparate, Videokameras, Organizer, PDA, sowie Geräte mit Kombinationen der Funktionen, wie zum Beispiel Smartphones.

Weiterhin kommt eine drahtlose oder auch drahtgebundene Datenübertragung zwischen dem Fahrerassistenzsystem in dem Fahrzeug und dem mobilen Gerät zustande. Beispielsweise kann dies über Bluetooth, USB, WLAN oder auch durch andere Übertragungstechniken und Übertragungsmedien erfolgen.

Über diese Schnittstelle zwischen dem Fahrzeug bzw. dem Fahrerassistenzsystem und dem mobilen Gerät werden dann die MMS-Elemente übertragen.

Dabei können diese MMS-Elemente in diesem und in jedem anderen Ausführungsbeispiel der Erfindung beispielsweise Signaltöne, Icons, Buttons, Bilder, Kartenausschnitte, digitale Karten, Töne, Audiodateien, Videodateien, darstellen.

Mit anderen Worten ist unter dem Begriff MMS-Element jedes Element zu verstehen, was von dem mobilen Gerät in dem Fahrerassistenzsystem angezeigt werden kann oder auch akustisch an den Fahrer übermittelt werden soll. Jede Funktionalität des mobilen Geräts, die zur Auswahl dem Benutzer an einer Mensch-Maschine-Schnittstelle dargestellt werden kann, kann durch solch ein MMS-Element repräsentiert werden.

Weiterhin ist es möglich, nicht nur die MMS-Elemente selbst von dem mobilen Gerät an das Fahrerassistenzsystem zu übertragen, sondern es ist auch möglich, das Layout und die Anzeige- bzw. Informationschoreografie der MMS-Elemente von dem mobilen Gerät zu übertragen.

Mit anderen Worten können auch Regeln, wann und wo welches MMS-Element dargestellt bzw. ausgegeben wird, an das Fahrerassistenzsystem zur Überprüfung hinsichtlich der Authentifizierung von der Authentifizierungsstelle übertragen.

Sämtliche dieser MMS-Elemente und Regeln können von dem mobilen Gerät auf das Fahrzeug übertragen werden, aber auch können sie eine Referenz auf bereits im Fahrzeug vorhandene MMS-Elemente und Regeln sein.

Dabei ist es von Bedeutung für die Erfindung, dass die Authentifizierungsstelle ein konkretes MMS-Element zur Verwendung in diesem konkreten Fahrerassistenzsystem davon abhängig machen kann, ob das Fahrerassistenzsystem von einer bestimmten Bauart oder von einem bestimmten Hersteller ist. Dabei kann die Authentifizierungsstelle auch der Fahrzeughersteller selbst sein.

Mit anderen Worten wird durch die Authentifizierung die Kompatibilität des geräteeigenen MMS-Elementes mit dem in dem Fahrerassistenzsystem vorhandenen MMS-System, der MMS-Struktur oder der gewünschten Optik oder Akustik, die dargestellt werden soll, hergestellt. Es wird somit eine durch den Fahrzeughersteller vorgegebene Konsistenz in der Darstellung der Mensch-Maschine-Schnittstelle erreicht, jedoch ggf. unter Verwendung von MMS Elementen aus dem mobilen Gerät.

Um sicherzustellen, dass die von dem mobilen Gerät an das Fahrzeug bzw. an das Fahrerassistenzsystem übertragenen MMS-Elemente und Regeln zum MMS-System des Fahrzeugs passen, müssen diese vorher beispielsweise vom Fahrzeughersteller in der Authentifizierungsstelle freigegeben werden. Hierzu kann das freigegebene Element bzw. die freigegebene Regel mit kryptographischen Mitteln von der Authentifizierungsstelle authentifiziert und verschlüsselt werden.

Überträgt nun ein mobiles Gerät MMS-Elemente oder Regeln, die nicht für das Fahrzeug bzw. für das Fahrerassistenzsystem authentifiziert sind, so wird ein Hinweis durch das Fahrerassistenzsystem ausgegeben und ein Standard-MMS Element des Fahrzeuges wird teilweise oder ganz anstatt des unauthentifizierten MMS-Elements von dem mobilen Gerät in dem Fahrzeug bzw. dem Fahrerassistenzsystem verwendet.

Mittels der Erfindung ist es möglich, in konsistenter Art und Weise Schnittstellen des mobilen Gerätes in dem Fahrzeug für den Benutzer darzustellen, ohne jedoch auf die Darstellungsweise in dem mobilen Gerät verzichten zu müssen, die der Benutzer gewohnt und mit der er vertraut ist. Durch die vorherige Authentifizierung wird jedoch eine gewünschte Konsistenz mit den Angaben des Fahrzeugherstellers erreicht.

In anderen Worten: Aufgrund der zentralen Authentifizierung der geräteigenen MMS-Elemente vor der Verwendung in dem Fahrzeug durch die Authentifizierungsstelle, erlaubt somit der Fahrzeughersteller die Darstellungsart, die von dem mobilen Gerätehersteller kommt, in das Fahrzeug zu implementieren. Dadurch werden Inkonsistenzen in der Darstellung vermieden, was die Sicherheit im Straßenverkehr erhöhen kann.

Jedoch ist es auch möglich, dass der Benutzer eine Darstellung, die vollständig vom Hersteller des Fahrzeuges vorgegeben ist, wählen kann, falls er mit dieser Darstellung vertrauter sein sollte. Somit kann er bei vielen verschiedenen und wechselnden mobilen Geräten stets die gewohnte fahrzeugherstellertypische Darstellung verwenden.

Im Falle einer Authentifizierung eines MMS Datensatzes des mobilen Gerätes hat der Benutzer somit die Wahl zwischen der zwei verschiedenen Darstellungen, einer vom Fahrzeughersteller vorgegebenen und einer die er von seinem mobilen Gerät her kennt und außerhalb des Fahrzeuges benutzt. Dies kann zu einer Verringerung des Verkehrsrisikos im Straßenverkehr führen.

Gemäß einem weiteren Ausführungsbeispiel der Erfindung ist die Steuereinheit ausgeführt, die von dem mobilen Gerät empfangenen geräteeigenen MMS-Elemente auf eine mögliche Authentifizierung hin selbstständig zu prüfen.

Mit anderen Worten wird dem Fahrerassistenzsystem lediglich das MMS des mobilen Gerätes bereitgestellt und aufgrund eines Authentifizierungsparameters in dem MMS-Element stellt das Fahrerassistenzsystem unabhängig fest, ob die Authentifizierungsstelle dieses Element freigegeben und authentifiziert hat. Ein zusätzlicher Kontakt zu einem weiteren externen Gerät oder einer weiteren externen Stelle durch das Fahrzeug bzw. das Fahrerassistenzsystem ist nicht vonnöten. Somit kann eine schnelle und effiziente Überprüfung der vom mobilen Gerät gesendeten MMS-Elemente selbstständig durch das Fahrerassistenzsystem erfolgen.

Gemäß einem weiteren Ausführungsbeispiel der Erfindung ist die Steuereinheit derart ausgeführt, eine Entscheidung hinsichtlich der Verwendung eines geräteeigenen MMS-Elementes im Fahrzeug selbstständig und auf Basis der Prüfung zu treffen.

Mit anderen Worten ist das Fahrerassistenzsystem mittels seiner Steuereinheit, die beispielsweise als Central Processing Unit (CPU) ausgeführt sein kann, in der Lage zu entscheiden, ob das MMS-Element vom mobilen Gerät verwendet wird, oder ob ein fahrzeugeigenes MMS-Element zum Einsatz kommt. Beispielsweise kann dieses aus einem Speicher des Fahrerassistenzsystems abgefragt werden.

Eine Nachfrage bei der Authentifizierungsstelle zu diesem Zeitpunkt der Anwendung des mobilen Gerätes kann damit vermieden werden.

Gemäß einem weiteren Ausführungsbeispiel der Erfindung ist das Fahrerassistenzsystems zu einer Auswahl eines optimalen fahrzeugseitigen MMS Elementes in dem Fall ausgeführt, dass das an das Fahrzeug übertragene geräteeigene MMS Element nicht authentifiziert ist.

Gemäß einem weiteren Ausführungsbeispiel der Erfindung ist ein Fahrzeug mit einem Fahrerassistenzsystem gemäß einem der vorherigen oder nachstehenden Ausführungsbeispiele angegeben.

Dabei soll unter dem Begriff "Fahrzeug" im ganzen Kontext der Erfindung beispielsweise ein Auto, ein Bus oder Lastkraftwagen Element oder solch eine Regel in dem entsprechenden Fahrzeug bzw. Fahrerassistenzsystem zulassen möchte. Die Entscheidung, ob solch ein MMS-Element freigegeben wird, kann auf Basis von sogenannten MMS-Referenzen, die in der Authentifizierungsstelle bereit liegen, erfolgen. Anschließend kann Authentifizierung dieser MMS-Elemente und/oder Regeln mittels kryptografischer Methoden erfolgen.

Mit anderen Worten stellt der Gerätehersteller des mobilen Geräts seine MMS-Elemente, die insgesamt eine Mensch-Maschine-Schnittstelle darstellen und seinen entsprechenden Regelsatz als MMS-Datensatz zusammen. Daraufhin sendet er den gesamten MMS-Datensatz an den oder die Fahrzeughersteller, um eine Kompatibilität seines mobilen Gerätes mit möglichst vielen OEMs herzustellen. Ein solcher MMS Datensatz kann also verschiedene Authentifizierungen von verschiedenen Authentifizierungsstellen aufweisen.

Die Authentifizierungsstelle prüft diesen MMS-Datensatz authentifiziert die einzelnen darin enthaltenen MMS-Elemente, falls er solches MMS-Element aus dem MMS-Datensatz zur späteren Verwendung in seinem Fahrerassistenzsystem bzw. in seinem Fahrzeug freigeben möchte. Sollte er dies nicht tun, erfolgt keine Authentifizierung.

Mit anderen Worten entsteht durch diese Verfahrensschritte ein zumindest teilweise authentifizierter MMS-Datensatz des mobilen Gerätes.

Dieser zumindest teilweise authentifizierte Datensatz wird wieder an den Gerätehersteller versendet, welcher anschließend den durch den Fahrzeughersteller authentifizierten Datensatz auf seinem mobilen Gerät speichert. Kommt anschließend ein solches mobiles Gerät in einem Fahrzeug des Fahrzeugherstellers zum Einsatz, und erfolgt eine Datenübertragung des MMS-Elements aus diesem authentifizierten Datensatz von dem mobilen Gerät an das Fahrzeug oder das Fahrerassistenzsystem, so prüft nun das Fahrerassistenzsystem, ob die MMS-Elemente authentifiziert sind oder nicht.

Falls ja, wird das MMS Element zugelassen und in der Darstellung beispielsweise einer digitalen Karte als Mensch-Maschine-Schnittstelle wie beispielsweise als Knopf, verwendet. Sollte die Antwort Nein sein, so gibt das Fahrerassistenzsystem einen Hinweis aus, dass ein entsprechendes fahrzeugeigenes MMS-Element bzw. eine entsprechende fahrzeugeigene MMS-Regel anstatt des nicht authentifizierten MMS-Elements bzw. Regel verwendet wird.

Gemäß einem weiteren Ausführungsbeispiel der Erfindung umfasst das Verfahren weiterhin den Schritt selbstständiges Prüfen des geräteeigenen MMS-Elementes durch das Fahrerassistenzsystem hinsichtlich einer Authentifizierung des geräteeigenen MMS-Elementes durch eine Authentifizierungsstelle.

Mit anderen Worten ist es nicht notwendig, mittels des erfindungsgemäßen Verfahrens eine zusätzliche Datenverbindung zwischen dem Fahrzeug beispielsweise der Authentifizierungsstelle herzustellen. Diese externe Stelle hat zum Zeitpunkt der Verwendung des mobilen Gerätes bereits die geräteeigenen MMS-Elemente und Regeln gegebenenfalls authentifiziert.

Durch das erfindungsgemäße Verfahren wird das Fahrerassistenzsystem zu einem selbstständigen System, welches oder aber auch ein Schienenfahrzeug, ein Schiff, ein Luftfahrzeug, wie Helikopter oder Flugzeug oder beispielsweise ein Fahrrad verstanden werden.

Gemäß einem weiteren Ausführungsbeispiel der Erfindung ist ein Verfahren zur Anpassung von Mensch-Maschine-Schnittstelle (MMS) Elementen eines mobilen Gerätes an MMS-Anforderungen eines Fahrzeuges angegeben, in welchem das mobile Gerät verwendet wird. Dabei weist das Verfahren die Schritte auf: Übertragen eines geräteeigenen MMS-Elementes von dem mobilen Gerät an ein Fahrerassistenzsystem des Fahrzeuges und Prüfen des geräteeigenen MMS-Elementes durch das Fahrerassistenzsystem hinsichtlich einer Authentifizierung des MMS-Elementes durch eine Authentifizierungsstelle. Weiterhin weist das Verfahren den Schritt Verwenden des geräteeigenen MMS-Elementes durch das Fahrerassistenzsystem, falls das geräteeigene MMS-Element zur Verwendung in dem Fahrerassistenzsystem durch die Authentifizierungsstelle freigegeben wurde, auf. Und es weist den Schritt auf Verwenden eines fahrzeugeigenen MMS-Elementes durch das Fahrerassistenzsystem, falls das geräteeigene MMS-Element nicht zur Verwendung in dem Fahrerassistenzsystem von der Authentifizierungsstelle freigegeben wurde.

Es sei darauf hingewiesen, dass im gesamten Kontext der vorliegenden Erfindung GPS stellvertretend für sämtliche globale Navigations-Satelliten-Systeme (GNSS) steht, wie zum Beispiel GPS, Galileo, GLONASS (Russland), Compass (China), IRNSS (Indien).

In anderen Worten werden die MMS-Elemente und Regeln aus dem mobilen Gerät durch die Authentifizierungsstelle dann freigegeben, wenn die Authentifizierungsstelle solch ein MMSohne externe Unterstützung direkt MMS-Elemente eines mobilen Gerätes zulassen und verwenden kann.

Gemäß einem weiteren Ausführungsbeispiel der Erfindung weist das Verfahren weiterhin den Schritt Bereitstellen eines geräteeigenen MMS-Elementes an die Zertifizierungsstelle auf. Weiter ist der Schritt enthalten: Freigeben und Authentifizieren des geräteeigenen MMS-Elementes zur Verwendung in dem Fahrerassistenzsystem durch die Authentifizierungsstelle, oder nicht freigeben und nicht authentifizieren des geräteeigenen MMS-Elementes zur Verwendung in dem Fahrerassistenzsystem durch die Authentifizierungsstelle.

Gemäß einem weiteren Ausführungsbeispiel der Erfindung weist das Verfahren weiterhin die folgenden Schritte auf: Wiederholen der zuvor genannten Verfahrensschritte mit einer Vielzahl geräteeigener MMS-Elemente, wodurch ein geräteeigener MMS-Datensatz mit authentifizierten und nicht authentifizierten geräteeigenen MMS-Elementen entsteht. Weiterhin weist das Verfahren den Schritt auf Speichern des MMS-Datensatzes auf dem mobilen Gerät zur späteren Übertragung der geräteeigenen MMS-Elemente an das Fahrerassistenzsystem.

Gemäß einem weiteren Ausführungsbeispiel der Erfindung erfolgt das Authentifizieren durch die Authentifizierungsstelle vor einem erstmaligen Übertragen des geräteeigenen MMS-Elementes an das Fahrzeug.

In anderen Worten wird gemäß diesem Ausführungsbeispiel der Erfindung vor der Benutzung des mobilen Geräts in dem Fahrzeug ein teilweise authentifizierter Datensatz in dem mobilen Gerät bereitgestellt. Eine anschließende Überprüfung, ob die geräteeigenen MMS-Elemente verwendet werden sollen, erfolgt damit zwingend nach einer Überprüfung und Freigabe durch die Authentifizierungsstelle.

Gemäß einem weiteren Ausführungsbeispiel der Erfindung weist das Verfahren weiterhin die Schritte Verschlüsseln der authentifizierten geräteeigenen MMS-Elemente durch die Authentifizierungsstelle und Entschlüsseln des geräteeigenen MMS-Elementes durch das Fahrerassistenzsystem auf.

Dabei können unterschiedlichste Verschlüsselungstechniken mittels gewünschter kryptografischer Methoden verwendet werden. Beispielsweise können die MMS-Elemente mit einem fahrzeugherstellerspezifischen Schlüssel verschlüsselt werden und das Fahrerassistenzsystem wird mit diesem fahrzeugherstellerspezifischen Schlüssel ausgestattet. Dieser Schlüssel kann lediglich ein Fahrzeug bzw. ein Fahrerassistenzsystem, das von diesem Hersteller stammt, einen entsprechend entschlüsselten MMS-Datensatz entschlüsseln.

Dabei ist sowohl in diesem als auch in jedem anderen Ausführungsbeispiel die Möglichkeit gegeben, dass ein MMS-Element bzw. Regel und auch ein MMS-Datensatz verschiedene Authentifizierungen und auch verschiedene Verschlüsselungen verschiedener Authentifizierungsstellen aufweist.

Somit kann eine Kompatibilität eines mobilen Gerätes zu verschiedenen Fahrerassistenzsystemen verschiedener Hersteller geschaffen werden. Diese Kompatibilität weist dabei in jedem Fall die Eigenschaft auf, dass nur diejenigen MMS-Elemente in dem Fahrerassistenzsystem verwendet werden, die von dem jeweiligen Hersteller authentifiziert wurden.

Gemäß einem weiteren Ausführungsbeispiel der Erfindung weist das Verfahren den weiteren Schritt auf Anpassen einer Schnittstelle zwischen dem mobilen Gerät und dem Fahrzeug mittels eines ersten Computerprogramms.

Da es vorkommen kann, dass sich die mobilen Geräte deutlich schneller technisch weiterentwickeln, als die Gegenstelle im Fahrzeug, ist es sinnvoll, die Übertragung zwischen dem mobilen Gerät und dem Fahrerassistenzsystem im Fahrzeug über eine anpassbare Schnittstelle (middleware) sicherzustellen. Dabei kann zum Beispiel JAVA verwendet werden.

Sollte eine solche zusätzliche Anpassung der Schnittstelle auf Seiten des Fahrzeuges bzw. des Fahrerassistenzsystems notwendig sein, so kann diese notwendige Änderung als Softwaremodul ebenfalls auf das mobile Gerät überspielt und von diesem an das Fahrerassistenzsystem bzw. Fahrzeug übermittelt werden.

Gemäß einem weiteren Ausführungsbeispiel der Erfindung weist das Verfahren weiterhin den Schritt erstmaliges Implementieren einer Unterstützung eines neuen MMS-Elementes in dem Fahrzeug mittels des ersten Computerprogramms auf.

Da eine Implementierung einer Unterstützung eines neuen MMS Elementes im Fahrzeug vergleichsweise arbeitsaufwändig ist, ermöglicht dieses Ausführungsbeispiel im Gegensatz dazu, dass ältere Fahrzeuge komfortabel neue Funktionen innerhalb neuerer mobiler Geräte zugegreifen können. Mit einer solchen Anpassung ist es zudem möglich, die Schnittstelle selbst an neue Gegebenheiten anzupassen.

Da weiterhin sämtliche MMS-Elemente und Regeln durch die Authentifizierungsstelle freigegeben werden und gegebenenfalls authentifiziert werden müssen, kann der Fahrzeughersteller bzw. der Hersteller des Fahrerassistenzsystems sicherstellen, dass das Fahrzeug-MMS (als Gesamtsystem) konsistent bleibt.

Mit anderen Worten ist mittels des angegebenen Verfahrens eine Anpassung des gesamten MMS eines Fahrerassistenzsystems über die Schnittstelle zum mobilen Gerät möglich.

Gemäß einem weiteren Ausführungsbeispiel der Erfindung weist das erste Computerprogramm ein erstes Modul für eine Anpassung des Fahrzeuges und ein zweites Modul zur Anpassung des mobilen Gerätes auf.

Diese Module können ebenfalls von der Authentifizierungsstelle authentifiziert werden.

Gemäß einem weiteren Ausführungsbeispiel der Erfindung weist das Verfahren weiterhin den Schritt auf selbstständiges Umschalten des Fahrerassistenzsystems auf eine Standardschnittstelle, falls das für die Anpassung des Fahrzeugs erforderliche Softwaremodul nicht authentifiziert ist.

Diese Standardschnittstelle kann beispielsweise nicht alle Eigenschaften des mobilen Gerätes unterstützen, kann aber eine grundsätzliche Funktion sicherstellen.

Gemäß einem weiteren Ausführungsbeispiel der Erfindung ist ein Programmelement angegeben, das, wenn es auf einem Prozessor in einem Fahrerassistenzsystems ausgeführt wird, das Fahrerassistenzsystem anleitet, die oben und im Folgenden beschriebene Schritte durchzuführen.

Bei dem Programmelement kann es sich beispielsweise um einen Teil einer Software handeln, die auf einem Prozessor gespeichert ist. Auch kann das Programmelement die Erfindung schon von Anfang an verwenden oder durch eine Aktualisierung (Update) zur Verwendung der Erfindung veranlasst werden.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben und im Folgenden beschriebene Verfahrensschritte durchzuführen.

Im Folgenden werden mit Verweis auf die Figuren Ausführungsbeispiele der Erfindung beschrieben.

### KURZE BESCHREIBUNG DER FIGUREN

Fig. 1 zeigt ein Fahrerassistenzsystem und ein mobiles Gerät gemäß einem Ausführungsbeispiel der Erfindung.
Fig. 2 zeigt ein mobiles Gerät, eine Authentifizierungsstelle und ein Fahrzeug mit einem Fahrerassistenzsystem gemäß einem Ausführungsbeispiel der Erfindung.
Fig. 3 zeigt ein Flussdiagramm eines Verfahrens gemäß einem Ausführungsbeispiel der Erfindung.

### DETAILLIERTE BESCHREIBUNG VON AUSFÜHRUNGSBEISPIELEN

Die Darstellungen in den Figuren sind schematisch und nicht maßstäblich.

In der folgenden Figurenbeschreibung werden für die gleichen oder ähnlichen Elemente die gleichen Bezugsziffern verwendet.

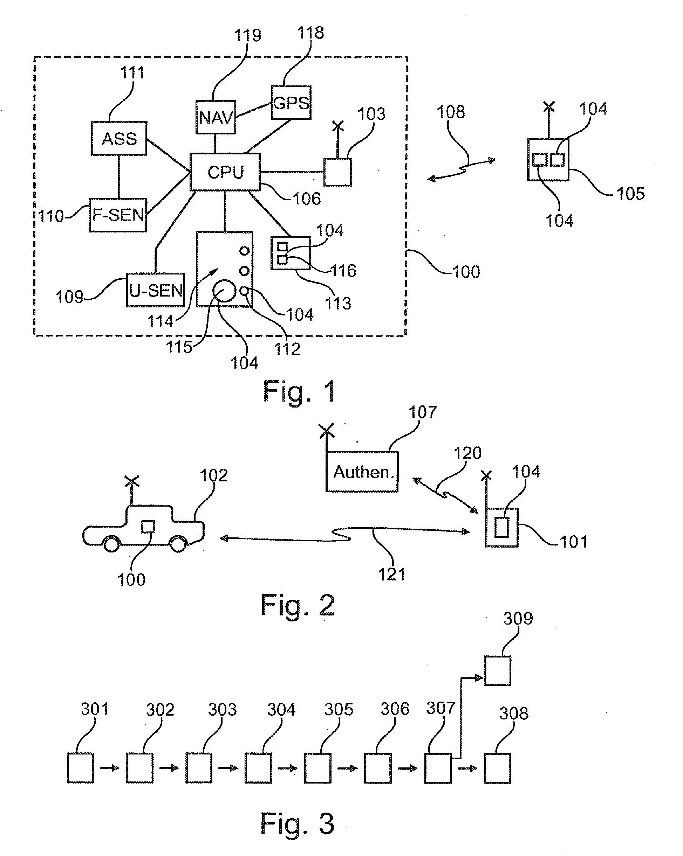

Fig. 1 zeigt ein Fahrerassistenzsystem 100, welches in einem Fahrzeug (siehe Fig. 2) verwendet wird und eine Kommunikationsschnittstelle 103 zum Empfang von geräteeigenen Mensch-Maschinen-Schnittstelle (MMS) Elementen 104 eines mobilen Gerätes 105 aufweist.

Weiterhin ist in Fig. 1 eine Steuereinheit 106 des Fahrerassistenzsystems zu sehen, die hier beispielhaft als CPU ausgeführt ist. Die Steuereinheit ist zur Verwendung der geräteeigenen MMS-Elemente ausgeführt ist, falls die MMS-Elemente von einer Authentifizierungsstelle (siehe Fig.2) freigegeben sind. Weiterhin ist das Fahrerassistenzsystem derart ausgeführt, dass es fahrzeugeigene MMS-Elemente verwendet, falls die geräteeigenen MMS-Elemente von der Authentifizierungsstelle nicht zur Verwendung in dem Fahrerassistenzsystem freigegeben sind. Dabei trifft das Fahrerassistenzsystem diese Entscheidung selbstständig.

Fig. 1 zeigt weiterhin eine Datenübertragung 108 zwischen der Kommunikationsschnittstelle 103 und dem mobilen Gerät 105. Diese Datenübertragung kann beispielsweise über Bluetooth oder auch über eine USB-Schnittstelle erfolgen, mit anderen Worten kann sie kabellos sowie auch festkörpergebunden erfolgen. Die Steuereinheit 106, kann ebenso mit der Kommunikationsschnittstelle drahtlos und drahtgebunden kommunizieren.

Weiterhin ist ein Umweltsensor 109 dargestellt. Dieser Sensor kann beispielsweise durch eine Kamera, einen Infrarotsensor oder einen anderen optischen Detektor ausgeführt sein, oder durch andere Sensoren, wie z.B. Radar, sowie als Kombinationen hiervon. Ebenso ist ein Fahrzeugsensor 110 in dem Fahrerassistenzsystem gezeigt, welcher beispielsweise als Geschwindigkeitssensor ausgeführt sein kann, aber auch als Beschleunigungssensor, Drehratensensor, Raddrehzahlsensor, Lenkradwinkelsensor, sowie als Kombinationen hiervon.

Weiterhin ist eine Fahrerassistenzeinheit 111 gezeigt, die ebenso Teil des Fahrerassistenzsystems 100 ist. Weiterhin umfass das Fahrerassistenzsystem eine Navigationseinheit 119 und eine GPS Einheit 118. Diese fünf Einheiten 109 bis 111 und 118 und 119 können ebenso mit der Steuereinheit 106 wie auch untereinander drahtlos oder auch drahtgebunden in Kommunikationsverbindung stehen und über diese Kommunikationskanäle Daten mit der Steuereinheit austauschen.

An der Steuereinheit 106 ist weiterhin eine erste Mensch-Maschine-Schnittstelle (MMS) 114 und eine zweite Mensch-Maschine-Schnittstelle 113 angebracht. Dabei ist 114 als Display ausgeführt, über welches der Benutzer des Fahrzeuges über verschiedenen Icons 112 und 115 eine Funktionen regeln und steuern kann, die durch das Mobilgerät 105 in dem Fahrzeug bereitgestellt wird. Mittels des Displays werden diese Funktionen angezeigt.

Dabei entsprechen die Icons 112 und 115 einem MMS-Element 104, welches direkt von dem mobilen Gerät 105 an das Fahrerassistenzsystem übertragen wurde und dort auf eine Authentifizierung überprüft wurde. Da die beiden Icons 115 und 112 eine entsprechende Authentifizierung aufweisen, wurden sie vom Fahrerassistenzsystem zur Darstellung in dem Display 114 zugelassen.

Die zweite Mensch-Maschine-Schnittstelle der Fig. 1, die mit dem Bezugszeichen 113 versehen ist, stellt beispielsweise das Display eines Parkleitsystems im Fahrzeug dar, welches durch ein mobiles Gerät, einem Navigationsgerät, unterstützt wird. Dabei stellt das MMS-Element 116, welches ein geräteeigenes authentifiziertes MMS-Element 104 ist, beispielsweise die Tonlage einer Ansage für das Parkleitsystem dar. Aufgrund der Authentifizierung dieses Elementes, welche zuvor durch die Authentifizierungsstelle zentral noch vor Einbau des mobilen Gerätes in das Fahrzeug erfolgt ist, kann das Fahrerassistenzsystem 100 selbstständig entscheiden, ob dieses MMS-Element bei der Ankopplung des mobilen Gerätes an das Fahrzeug verwendet werden darf oder nicht.

Fig. 2 zeigt ein Fahrzeug 102 mit einem Fahrerassistenzsystem 100 gemäß einem Ausführungsbeispiel der Erfindung. Weiterhin ist die Authentifizierungsstelle 107 dargestellt, welche mittels einer Kommunikationsverbindung 120 mit dem mobilen Gerät 101 in Verbindung steht. Dabei werden die MMS-Elemente 104 zwischen dem mobilen Gerät und der Authentifizierungsstelle ausgetauscht, um anschließend von der Authentifizierungsstelle geprüft und gegebenenfalls freigegeben und anschließend authentifiziert und falls gewünscht zusätzlich verschlüsselt zu werden. Weiterhin ist eine Kommunikationsverbindung 121 zwischen dem Fahrzeug und dem mobilen Gerät dargestellt, über welche der teilweise authentifizierte und teilweise nicht authentifizierte MMS-Datensatz an das Fahrzeug 102 übermittelt werden kann. Weiterhin sind die beiden in den Fig. 1 und Fig. 2 dargestellten Ausführungsbeispiele in der Lage, mittels eines ersten Computerprogramms (hier nicht gezeigt) die Übertragung zwischen dem mobilen Gerät und dem Fahrerassistenzsystem über eine anpassbare Schnittstelle sicherzustellen. Dies kann beispielsweise mittels JAVA erfolgen. Dabei kann dieses erste Computerprogramm ebenso auf dem mobilen Gerät 105 gespeichert sein.

Sollte eine Anpassung der Schnittstelle auf Seiten des Fahrzeuges notwendig sein, so wird diese notwendige Änderung als Softwaremodul ebenfalls auf dem mobilen Gerät bereitgestellt und von diesem an das Fahrerassistenzsystem übermittelt. Beide Softwaremodule, das erste zur Anpassung im Fahrzeug, das zweite zur Anpassung im mobilen Gerät, werden dabei ebenso gemäß dem erfindungsgemäßen Verfahren von der Authentifizierungsstelle authentifiziert. Dabei ist das Fahrerassistenzsystem in der Lage, für den Fall eines nicht authentifizierten Softwaremoduls eine Standardschnittstelle einzuschalten.

Gemäß dem in Fig 1 gezeigten Ausführungsbeispiel der Erfindung ist es möglich, dass falls ein komplettes MMS, bestehend aus einer Vielzahl von MMS-Elementen, über eine Software dargestellt wird, zum Beispiel einen Flash-Player, das komplette MMS von der Authentifizierungsstelle freigegeben und authentifiziert wird. Anschließend kann dieses komplette MMS innerhalb des Fahrerassistenzsystems aufgrund der Authentifizierung verwendet werden.

Fig. 3 zeigt ein Flussdiagramm eines Verfahrens gemäß einem Ausführungsbeispiel. In Schritt 301 wird ein MMS-Datensatz bestehend aus mehreren MMS-Elementen und einem Regelsatz durch einen Gerätehersteller bereitgestellt. Dieser Regelsatz dient zur beispielsweise optischen oder akustischen Darstellung der Funktionen des mobilen Geräts in dem Fahrzeug, in welchem das Fahrerassistenzsystem eingebaut ist. In Schritt 302 wird dieser MMS-Datensatz an den Fahrzeughersteller oder auch an eine Vielzahl verschiedener Fahrzeughersteller versendet, um dort eine im Folgenden beschriebene Authentifizierung vorzunehmen.

Im Detail wird in Schritt 303 seitens der Authentifizierungsstelle der MMS-Datensatz geprüft und jedes darin enthaltene MMS-Element oder jede Regel auf ihre Kompatibilität mit der gewünschten Darstellung im Fahrzeug verglichen.

Im Schritt 304 entscheidet die Authentifizierungsstelle, ob das entsprechende MMS-Element authentifiziert wird oder nicht und unterlässt oder veranlasst gegebenenfalls eine Authentifizierung. Eine zusätzliche Verschlüsselung mittels verschiedener kryptografischer Methoden ist möglich. In Schritt 306 wird dieser zumindest teilweise authentifizierte Datensatz wieder an den Gerätehersteller des mobilen Gerätes versandt und anschließend auf dem mobilen Gerät gespeichert.

In Schritt 307 prüft ein Fahrerassistenzsystem, nachdem ein mobiles Gerät mit einem solchen teilweise authentifizierten Datensatz (wobei der Datensatz auch vollständig authentifiziert sein kann) bei einer Übertragung einzelner MMS-Elemente aus diesem Datensatz an das Fahrerassistenzsystem, ob das einzelne MMS-Element authentifiziert ist. Danach hat das Fahrerassistenzsystem zwei Möglichkeiten, Schritt 308 und Schritt 309.

Sollte das MMS-Element nicht authentifiziert sein, erfolgt Schritt 308, in welchem das Fahrerassistenzsystem ein fahrzeugeigenes MMS-Element beispielsweise aus einem Speicher abruft und verwendet. Hingegen erfolgt Schritt 309, falls das geräteeigene, also das aus dem mobilen Gerät stammende MMS-Element authentifiziert ist. Dann wird dieses MMS-Element bezüglich seiner Funktion verwendet.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Weiterhin sei explizit angemerkt, dass das oben beschriebene Verfahren in der genannten Reihenfolge erfolgen kann, jedoch auch eine andere Reihenfolge der genannten Verfahrensschritte möglich ist.

## Patentansprüche

1. Fahrerassistenzsystem (100) zum Einbau in ein Fahrzeug (102), das Fahrerassistenzsystem aufweisend:
eine Kommunikationsschnittstelle (103) zum Empfang von geräteeigenen Mensch-Maschine-Schnittstelle (MMS) Elementen (104) eines mobilen Gerätes (105),
eine Steuereinheit (106) zur Verwendung der geräteeigenen MMS Elemente, falls die MMS-Elemente von einer Authentifizierungsstelle (107) zur Verwendung in dem Fahrerassistenzsystem freigegeben sind, und zur Verwendung von fahrzeugeigenen MMS-Elementen, falls die geräteeigenen MMS-Elemente von der Authentifizierungsstelle nicht zur Verwendung in dem Fahrerassistenzsystem freigegeben sind,
**dadurch gekennzeichnet, dass** die Steuereinheit derart ausgeführt ist,
die von dem mobilen Gerät empfangenen geräteeigenen MMS-Elemente auf eine mögliche Authentifizierung selbstständig zu prüfen, und die MMS-Elemente mit einem fahrzeugherstellerspezifischen Schlüssel verschlüsselt werden und das Fahrerassistenzsystem mit diesem fahrzeugherstellerspezifischen Schlüssel ausgestattet wird.

2. Fahrerassistenzsystem gemäß Anspruch 1,
wobei die Steuereinheit ausgeführt ist, eine Entscheidung hinsichtlich der Verwendung eines geräteeigenen MMS-Elementes im Fahrerassistenzsystem selbstständig und auf Basis der Prüfung zu treffen.

3. Fahrzeug (102) mit einem Fahrerassistenzsystem (100) gemäß einem der Ansprüche 1 bis 2.

4. Verfahren zur Anpassung von Mensch-Maschine-Schnittstelle (MMS) Elementen (104) eines mobilen Gerätes (105) an MMS Anforderungen eines Fahrzeuges (102), in welchem das mobile Gerät verwendet wird, wobei das Verfahren die Schritte aufweist:
Übertragen (S1) eines geräteeigenen MMS-Elementes von dem mobilen Gerät an ein Fahrerassistenzsystem des Fahrzeugs,
Prüfen des geräteeigenen MMS-Elements durch das Fahrerassistenzsystem hinsichtlich einer Authentifizierung des MMS-Elementes durch eine Authentifizierungsstelle (S2), und
Verwenden des geräteeigenen MMS-Elementes durch das Fahrerassistenzsystem, falls das geräteeigene MMS-Element zur Verwendung in dem Fahrerassistenzsystem durch die Authentifizierungsstelle freigegeben wurde (S3) und Verwenden eines fahrzeugeigenen MMS-Elementes durch das Fahrerassistenzsystems, falls das geräteeigene MMS-Element nicht zur Verwendung in dem Fahrerassistenzsystem von der Authentifizierungsstelle freigegeben wurde (S4),
**gekennzeichnet durch** den folgenen Schritt: selbstständiges Prüfen des geräteeigenen MMS-Elementes **durch** das Fahrerassistenzsystem hinsichtlich einer Authentifizierung des geräteeigenen MMS-Elementes **durch** eine Authentifizierungsstelle (S5), wobei die MMS-Elemente mit einem fahrzeugherstellerspezifischen Schlüssel verschlüsselt werden und das Fahrerassistenzsystem mit diesem fahrzeugherstellerspezifischen Schlüssel ausgestattet wird.

5. Verfahren gemäß Anspruch 4, das Verfahren weiterhin aufweisend die Schritte:
Bereitstellen eines geräteeigenen MMS-Elementes an die Authentifizierungsstelle (S6),
Freigeben und Authentifizieren des geräteeigenen MMS-Elementes zur Verwendung in dem Fahrerassistenzsystem durch die Authentifizierungsstelle (S7), oder Nichtfreigeben und Nichtauthentifizieren des geräteeigenen MMS-Elementes zur Verwendung in dem Fahrerassistenzsystem durch die Authentifizierungsstelle (S8).

6. Verfahren gemäß Anspruch 5, das Verfahren weiterhin aufweisend die Schritte:
Wiederholen der Verfahrensschritte S6 bis S8 mit einer Vielzahl geräteeigener MMS-Elemente, wodurch ein geräteeigener MMS-Datensatz mit authentifizierten und nicht authentifizierten geräteeigenen MMS-Elementen entsteht, und
Speichern des MMS-Datensatzes auf dem mobilen Gerät zur späteren Übertragung der geräteeigenen MMS-Elemente an das Fahrerassistenzsystem.

7. Verfahren gemäß einem der Ansprüche 4 bis 6,
wobei das Authentifizieren durch die Authentifizierungstelle vor einem erstmaligen Übertragen des geräteeigenen MMS-Elementes an das Fahrzeug erfolgt.

8. Verfahren gemäß einem der Ansprüche 4 bis 7, wobei das Verfahren weiterhin die Schritte aufweist:
Verschlüsseln der authentifizierten geräteeigenen MMS-Elemente durch die Authentifizierungsstelle, und
Entschlüsseln des geräteeigenen MMS-Elementes durch das Fahrerassistenzsystem.

9. Verfahren gemäß einem der Ansprüche 4 bis 8, wobei das Verfahren weiterhin den Schritt aufweist:
Anpassen einer Schnittstelle zwischen dem mobilen Gerät und dem Fahrzeug mittels eines ersten Computer Programms.

10. verfahren gemäß Anspruch 9,
wobei das erste Computer Programm ein erstes Modul für eine Anpassung des Fahrzeuges aufweist, und
wobei das erste Computer Programm ein zweites Modul zur Anpassung des mobilen Gerätes aufweist.

11. Verfahren gemäß einem der Ansprüche 4 bis 10, wobei das Verfahren weiterhin den Schritt aufweist:
Erstmaliges Implementieren einer Unterstützung eines neuen MMS-Elementes in dem Fahrzeug mittels des ersten Computer Programms.

12. Programmelement basierend auf einem Verfahren nach Anspruch 4, das wenn es auf einem Prozessor ausgeführt wird, den Prozessor anleitet, die folgenden Schritte durchzuführen:
Prüfen eines geräteeigenen MMS-Elements durch ein Fahrerassistenzsystem hinsichtlich einer Authentifizierung des MMS-Elementes durch eine Authentifizierungsstelle, und
Verwenden des geräteeigenen MMS-Elementes durch das Fahrerassistenzsystem falls das geräteeigene MMS-Element zur Verwendung in dem Fahrerassistenzsystem durch die Authentifizierungsstelle freigegeben wurde, und Verwenden eines fahrzugeigenen MMS-Elementes durch das Fahrerassistenzsystems falls das geräteeigene MMS-Element nicht zur Verwendung in dem Fahrerassistenzsystem von der Authentifizierungsstelle freigegeben wurde,
**dadurch gekennzeichnet, dass** die MMS-Elemente mit einem fahrzeugherstellerspezifischen Schlüssel verschlüsselt werden und das Fahrerassistenzsystem mit diesem fahrzeugherstellerspezifischen Schlüssel ausgestattet wird.

13. Computerlesbares Medium basierend auf einem Verfahren nach Anspruch 4, auf dem ein Programmelement gespeichert ist und, das wenn es auf einem Prozessor ausgeführt wird, den Prozessor anleitet, die folgenden Schritte durchzuführen:
Prüfen eines geräteeigenen MMS-Elements durch ein Fahrerassistenzsystem hinsichtlich einer Authentifizierung des MMS-Elementes durch eine Authentifizierungsstelle, und
Verwenden des geräteeigenen MMS-Elementes durch das Fahrerassistenzsystem falls das geräteeigene MMS-Element zur Verwendung in dem Fahrerassistenzsystem durch die Authentifizierungsstelle freigegeben wurde, und Verwenden eines fahrzeugeigenen MMS-Elementes durch das Fahrerassistenzsystems falls das geräteeigene MMS-Element nicht zur Verwendung in dem Fahrerassistenzsystem von der Authentifizierungsstelle freigegeben wurde,
**dadurch gekennzeichnet, dass** die MMS-Elemente mit einem fahrzeugherstellerspezifischen Schlüssel verschlüsselt werden und das Fahrerassistenzsystem mit diesem fahrzeugherstellerspezifischen Schlüssel ausgestattet wird.

## Claims

1. Driver assistance system (100) for installation in a vehicle (102), said driver assistance system having:
a communication interface (103) for receiving device-inherent man-machine-interface (MMI) elements (104) of a mobile device (105),
a control unit (106) for using the device-inherent MMI elements if the MMI elements are released by an authentication centre (107) for use in the driver assistance system, and for using vehicle-inherent MMI elements if the device-inherent MMI elements are not released by the authentication centre for use in the driver assistance system,
**characterized in that** the control unit is designed in such a way as to automatically check the device-inherent MMI elements received from the mobile device for possible authentication, and the MMI elements are encrypted using a vehicle-manufacturer-specific key and the driver assistance system is equipped with this vehicle-manufacturer-specific key.

2. Driver assistance system according to Claim 1,
wherein the control unit is designed to make a decision regarding the use of a device-inherent MMI element in the driver assistance system automatically and on the basis of the check.

3. Vehicle (102) having a driver assistance system (100) according to either of Claims 1 to 2.

4. Method for matching man-machine-interface (MMI) elements (104) of a mobile device (105) to MMI requirements of a vehicle (102) in which the mobile device is used, wherein the method has the following steps:
a device-inherent MMI element is transmitted (S1) from the mobile device to a driver assistance system of the vehicle, the device-inherent MMI element is checked by the driver assistance system for authentication of the MMI element by an authentication centre (S2), and
the device-inherent MMI element is used by the driver assistance system if the device-inherent MMI element has been released for use in the driver assistance system by the authentication centre (S3), and a vehicle-inherent MMI element is used by the driver assistance system if the device-inherent MMI element has not been released for use in the driver assistance system by the authentication centre (S4),
**characterized by** the following step:
the device-inherent MMI element is automatically checked by the driver assistance system for authentication of the device-inherent MMI element by an authentication centre (S5),
wherein the MMI elements are encrypted using a vehicle-manufacturer-specific key and the driver assistance system is equipped with this vehicle-manufacturer-specific key.

5. Method according to Claim 4, said method also having the following steps:
a device-inherent MMI element is provided for the authentication centre (S6),
the device-inherent MMI element is released and authenticated for use in the driver assistance system by the authentication centre (S7), or the device-inherent MMI element is not released and not authenticated for use in the driver assistance system by the authentication centre (S8).

6. Method according to Claim 5, said method also having the following steps:
method steps S6 to S8 are repeated for a multiplicity of device-inherent MMI elements, which results in a device-inherent MMI data record with authenticated and non-authenticated device-inherent MMI elements, and
the MMI data record is stored on the mobile device for the purpose of later transmission of the device-inherent MMI elements to the driver assistance system.

7. Method according to one of Claims 4 to 6,
wherein the authentication by the authentication centre takes place before a device-inherent MMI element is transmitted to the vehicle for the first time.

8. Method according to one of Claims 4 to 7,
wherein the method also has the following steps:
the authenticated device-inherent MMI elements are encrypted by the authentication centre, and
the device-inherent MMI element is decrypted by the driver assistance system.

9. Method according to one of Claims 4 to 8,
wherein the method also has the following step:
an interface between the mobile device and the vehicle is matched by means of a first computer program.

10. Method according to Claim 9,
wherein the first computer program has a first module for matching the vehicle, and
wherein the first computer program has a second module for matching the mobile device.

11. Method according to one of Claims 4 to 10, wherein the method also has the following step:
support for a new MMI element in the vehicle is implemented for the first time by means of the first computer program.

12. Program element based on a method according to Claim 4, which, when executed on a processor, instructs the processor to perform the following steps:
a device-inherent MMI element is checked by a driver assistance system for authentication of the MMI element by an authentication centre, and
the device-inherent MMI element is used by the driver assistance system if the device-inherent MMI element has been released for use in the driver assistance system by the authentication centre, and a vehicle-inherent MMI element is used by the driver assistance system if the device-inherent MMI element has not been released for use in the driver assistance system by the authentication centre,
**characterized in that** the MMI elements are encrypted using a vehicle-manufacture-specific key and the driver assistance system is equipped with this vehicle-manufacturer-specific key.

13. Computer-readable medium based on a method according to Claim 4, which is stored on a program element and which, when executed on a processor, instructs the processor to perform the following steps:
a device-inherent MMI element is checked by a driver assistance system for authentication of the MMI element by an authentication centre, and
the device-inherent MMI element is used by the driver assistance system if the device-inherent MMI element has been released for use in the driver assistance system by the authentication centre, and a vehicle-inherent MMI element is used by the driver assistance system if the device-inherent MMI element has not been released for use in the driver assistance system by the authentication centre,
**characterized in that** the MMI elements are encrypted using a vehicle-manufacturer-specific key and the driver assistance system is equipped with this vehicle-manufacturer-specific key.

## Revendications

1. Système (100) d'aide à la conduite à incorporer dans un véhicule (102), le système d'aide à la conduite comportant :
une interface (103) de communication pour la réception d'éléments (104) d'interface homme-machine (MMS) propres à un appareil d'un appareil (105) mobile,
- une unité (106) de commande pour l'utilisation d'éléments MMS propres à l'appareil, si les éléments MMS sont libérés par un point (107) d'authentification pour l'utilisation dans le système d'assistance à la conduite et pour l'utilisation d'éléments MMS propres au véhicule, si les éléments MMS propres à l'appareil ne sont pas libérés par le point d'authentification pour l'utilisation dans le système d'assistance à la conduite,
**caractérisé en ce que** l'unité de commande est réalisée de manière à ce que les éléments MMS propres à l'appareil reçus par l'appareil mobile soient contrôlés indépendamment en ce qui concerne une authentification possible et les éléments MMS sont chiffrés par une clé spécifique au fabricant du véhicule et **en ce que** le système d'assistance à la conduite est équipé de cette clé spécifique au fabricant du véhicule.

2. Système d'assistance à la conduite selon la revendication 1,
dans lequel l'unité de commande est réalisée pour prendre une décision concernant l'utilisation d'un élément MMS propre à l'appareil dans le système d'assistance au véhicule d'une manière indépendante et sur la base du contrôle.

3. Véhicule (102) ayant un système (100) d'assistance à la conduite suivant l'une des revendications 1 à 2.

4. Procédé d'adaptation d'éléments (104) d'interface homme-machine (MMS) d'un appareil (105) mobile à des exigences MMS d'un véhicule (102) dans lequel l'appareil mobile est utilisé, le procédé ayant des stades :
transmission (S1) d'un élément MMS propre à l'appareil de l'appareil mobile à un système d'assistance à la conduite du véhicule
contrôle de l'élément MMS propre à l'appareil par le système d'assistance à la conduite en ce qui concerne une authentification de l'élément MMS par un point (S2) d'authentification et
utilisation de l'élément MMS propre à l'appareil par le système d'assistance à la conduite, si l'élément MMS propre à l'appareil a été libéré (S3) pour l'utilisation dans le système d'assistance à la conduite par le point d'authentification et utilisation d'un élément MMS propre au véhicule par le système d'assistance à la conduite, si l'élément MMS propre à l'appareil n'a pas été libéré (S4) par le point d'authentification pour l'utilisation dans le système d'assistance à la conduite,
**caractérisé par** le stade suivant : contrôle indépendant de l'élément MMS propre à l'appareil par le système d'assistance à la conduite en ce qui concerne une authentification de l'élément MMS propre à l'appareil par un point (SS) d'authentification dans lequel les éléments MMMS sont chiffrés par une clé spécifique au fabricant du véhicule et le système d'assistance à la conduite est équipé de cette clé spécifique au fabricant du véhicule.

5. Procédé selon la revendication 4, le procédé ayant en outre les stades suivants :
mise à disposition d'un élément MMS propre à l'appareil au point d'authentification (S6),
libération et authentification de l'élément MMS propre à l'appareil pour l'utilisation dans le système d'assistance à la conduite par le point d'authentification (S7) ou non-libération et non-authentification de l'élément MMS propre à l'appareil pour l'utilisation dans le système d'assistance à la conduite par le point d'authentification (S8).

6. Procédé selon la revendication 5, le procédé comprenant en outre les stades :
répétition des stades S6 à S8 du procédé avec une pluralité d'éléments MMS propres à l'appareil, un jeu de données MMS propres à l'appareil se créant avec des éléments MMS propres à l'appareil authentifiés et non identifiés et
mémorisation du jeu de données MMS sur l'appareil mobile pour la transmission ultérieure des éléments MMS propres à l'appareil au système d'assistance à la conduite.

7. Procédé selon les revendications 4 à 6, dans lequel l'authentification par le point d'authentification s'effectue avant une transmission pour la première fois de l'élément MMS propre à l'appareil au véhicule.

8. Procédé selon l'une des revendications 4 à 7, dans lequel le procédé a en outre les stades :
chiffrement par le point d'authentification des éléments MMS propres à l'appareil qui ont été authentifiés et
déchiffrement par le système d'assistance à la conduite des éléments MMS propres à l'appareil.

9. Procédé selon l'une des revendications 4 à 8 ; dans lequel le procédé a en outre le stade :
adaptation d'une interface entre l'appareil mobile et le véhicule au moyen d'un premier programme d'ordinateur.

10. Procédé selon la revendication 9, dans lequel le premier programme d'ordinateur a un premier module pour une adaptation du véhicule, et
dans lequel le premier programme d'ordinateur a un deuxième module pour l'adaptation de l'appareil mobile.

11. Procédé selon l'une des revendications 4 à 10, dans lequel le procédé à en outre le stade :
mise en oeuvre pour la première fois d'une assistance d'un nouvel élément MMS dans le véhicule au moyen du premier programme d'ordinateur.

12. Elément de programme reposant sur un procédé suivant la revendication 4 qui, lorsqu'il est exécuté sur un processeur, donne au processeur instruction d'effectuer les stades suivants :
contrôle d'un élément MMS propre à l'appareil par un système d'assistance à la conduite en ce qui concerne une authentification de l'élément MMS par un point d'authentification et
utilisation de l'élément MMS propre à l'appareil par le système d'assistance à la conduite, si l'élément MMS propre à l'appareil a été libéré par le point d'authentification pour l'utilisation dans le système d'assistance à la conduite et utilisation d'un élément MMS propre au véhicule par le système d'assistance à la conduite, si l'élément MMS propre à l'appareil n'a pas été libéré par le point d'authentification pour l'utilisation dans le système d'assistance à la conduite,
**caractérisé en ce que** les éléments MMS sont chiffrés par une clé spécifique au fabricant du véhicule et le système d'assistance à la conduite est équipé de cette clé spécifique au fabricant du véhicule.

13. Support pouvant être lu par un ordinateur reposant sur un procédé suivant la revendication 4 et sur lequel est mémorisé un élément de programme qui, lorsqu'il est réalisé sur un processeur, donne instruction au processeur d'effectuer les stades suivants :
contrôle d'un élément MMS propre à l'appareil par un système d'assistance à la conduite en ce qui concerne une authentification de l'élément MMS par un point d'authentification et
utilisation de l'élément MMS propre à l'appareil par le système d'assistance à la conduite, si l'élément MMS propre à l'appareil a été libéré par le point d'authentification pour l'utilisation dans le système d'assistance à la conduite et
utilisation d'un élément MMS propre au véhicule par le système d'assistance à la conduite, si l'élément MMS propre à l'appareil n'a pas été libéré par le point d'authentification pour l'utilisation dans le système d'assistance à la conduite,
**caractérisé en ce que** les éléments MMS sont chiffrés par une clé spécifique au fabricant du véhicule et le système d'assistance à la conduite est équipé de cette clé spécifique au fabricant du véhicule.
